# EUROPÄISCHE PATENTSCHRIFT

(11) **EP 0 770 770 B1**
(45) Veröffentlichungstag und Bekanntmachung des Hinweises auf die Patenterteilung: **17.04.2002**
(21) Anmeldenummer: 96810651.8
(22) Anmeldetag: 30.09.1996
(51) Int. Cl.: F02C 7/141, F02C 7/18

(54) **Verfahren zum Betrieb einer Gasturbogruppe**
Method of operating a gas turbo group
Procédé de fonctionnement d'un groupe turbo à gaz

(30) Priorität: 26.10.1995 DE 19539773
(43) Veröffentlichungstag der Anmeldung: 02.05.1997
(73) Patentinhaber: Alstom, 75116 Paris (FR)
(72) Erfinder: Nielsen, Henrik, 5430 Wettingen (CH)
(74) Vertreter: Liebe, Rainer

(56) Entgegenhaltungen:
- US-A- 5 133 180
- US-A- 5 207 053
- US-A- 5 337 553
- US-A- 5 490 377
- US-A- 5 535 584

## Beschreibung

### Technisches Gebiet

Die vorliegende Erfindung betrifft ein Verfahren zum Betrieb einer Gasturbogruppe gemäss Oberbegriff des Anspruchs 1.

### Stand der Technik

Bei Gasturbogruppen der neueren Generation nimmt die Kühlung der thermisch hochbelasteten Aggregate eine zentrale Rolle ein. Grundsätzlich strebt man an, Luft an geeigneter Stelle aus dem Prozess zu entnehmen, diese den zu kühlenden Aggregaten zuzuführen, und sie anschliessend wieder an geeigneter Stelle in den Kreislauf der Gasturbogruppe zurückzuführen. Bei dieser Art der Kühlung wird der wirksame Massenstrom der Anlage durchwegs geschmälert, was regelmässig zu einer Wirkungsgradeinbusse derselben führt. Grundsätzlich hängt dies damit zusammen, dass bei diesen Gasturbogruppen in der Regel keine überschüssige Luft zur Verfügung steht, welche ohne Einbusse der Leistung und des Wirkungsgrades abgezweigt werden könnte. Die Ausgangslage bezüglich Kühlung der kalorisch hochbelasteten Aggregate akzentuiert sich, wenn die Gasturbogruppe in Kombination mit einem Dampfkreislauf steht, also als Kombianlage betrieben wird, denn um möglichst viel Dampf von hochstehender Qualität zu erhalten, müssen die Abgase aus der letzten Turbine der Gasturbogruppe, welche das eigentliche kalorische Potential für die Dampfbildung erbringen, Temperaturen von über 600°C. aufweisen. Es ist naheliegend, dass diese Abgastemperatur stromauf die Temperatur der Heissgase aus den Brennkammern induziert, womit die Kühlung derselben entsprechend intensiv ausgelegt werden muss. Soweit ersichtlich müssen für eine solche Kühlung regelmässig Kompromisse eingegangen werden, deren Wirkungen entweder die Kühlkapazität oder den Wirkungsgrad der Anlage betreffen.

Aus der US 5,392,595 ist bekannt, einen Teil der Verdichterluft einer mit Flüssigbrennstoff zu betreibenden Gasturbogruppe durch einen als Konverter für Brennstoff ausgeführten Kühlluftkühler zu führen, und die von der Kühlluft abgegebene Wärmemenge zur chemischen Umwandlung eines Flüssigbrennstoffes in gasförmige Komponenten auszunutzen, mit dem die Brennkammer der Gasturbogruppe sodann befeuert wird. Daher muss hier eine möglichst hundertprozentige Umwandlung des Brennstoffs angestrebt werden, um die Funktion zu gewährleisten. Dies erfordert aber eine Mindesttemperatur im Konverter, weshalb in der US 5,392,595 beispielsweise ein Zusatzverdichter notwendig wird, welcher die Temperatur der abzukühlenden Verdichterluftmenge zunächst anhebt, was besonders im Teillastbetrieb der Gasturbogruppe notwendig ist. Hierdurch wird ein solches Verfahren vergleichweise teuer, kompliziert, störungsanfällig, und die Effizienz wird durch den zusätzlichen Verdichter getrübt.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art mit einem minimierten Luftanteil aus dem Prozess eine maximierte Kühlwirkung der kalorisch hochbelasteten Aggregate der Gasturbogruppe zu erhalten.

Die Aufgabe wird anhand einer Schaltung gelöst, welche mit der Konversion eines Erdgases im Zusammenhang steht. Diese Konversion basiert auf einer thermochemischen Rekuperation und hat zum Ziel, ein Brennstoff höheren Brennwertes gegenüber demjenigen des Erdgases bei der Zugabe von Energie bereitzustellen. Von der Zusammensetzung des zur Konversion gebrachten Gemisches läuft die Reaktion: CH4 + H2O + Q > CO + 3H2 endotherm ab, wobei Q die zuzuführende Energie bedeutet. Gleichwohl ist es betriebstechnisch nicht notwendig, eine hundertprozentige Konversion zu erreichen, da die Brennkammer in jedem Falle mit einem gasförmigen Brennstoff betrieben wird. Beim Anfahren der Anlage muss und kann sogar vollständig auf die Konversion verzichtet werden, da diese ja nicht primär zur Funktion der Gasturbogruppe beiträgt, sondern zur Wärmeaufnahme aus der Kühlluft dient, wenn diese ein gewisses Temperaturniveau überschreitet.

Die endotherme Reaktion macht sich die Erfindung zunutze, indem diese Energie aus der Verdichterluft entnommen wird, d.h. ein Teil Verdichterluft wird für die Konversion abgezweigt und in einen vom Erdgas/Wasser- oder Erdgas/Dampf-Gemisch misch durchströmten katalytischen Generator geleitet. Dabei wirkt dieser Generator im Grunde genommen als Wärmetauscher, dergestalt, dass die entnommene Verdichterluft hierin eine substantielle Abkühlung erfährt, so dass sie anschliessend als hochqualitative Kühlluft an geigneter Stelle für die zu kühlenden Aggregate der Anlage eingesetzt werden kann.

Die wesentlichen Vorteile der Erfindung sind darin zu sehen, dass für den endothermen Prozess keine Energie abgezweigt oder zugeführt werden muss, welche in der Bilanz in jedem Fall zu einer Wirkungsgradeinbusse der Anlage führte. Gleichzeitig muss für die thermische Behandlung der Verdichterluft zu Kühlluft auch keine zusätzliche Energie aufgewendet werden. Schliesslich ist diese Kühlluft dermassen hochqualitativ, dass bereits kleinere Mengen für die angestrebte Kühlung der thermisch hochbelasteten Aggregate der Gasturbogruppe ausreichen.

Vorteilhafte und zweckmässige Weiterbildungen der erfindungsgemässen Aufgabenlösung sind in den weiteren Ansprüchen gekennzeichnet.

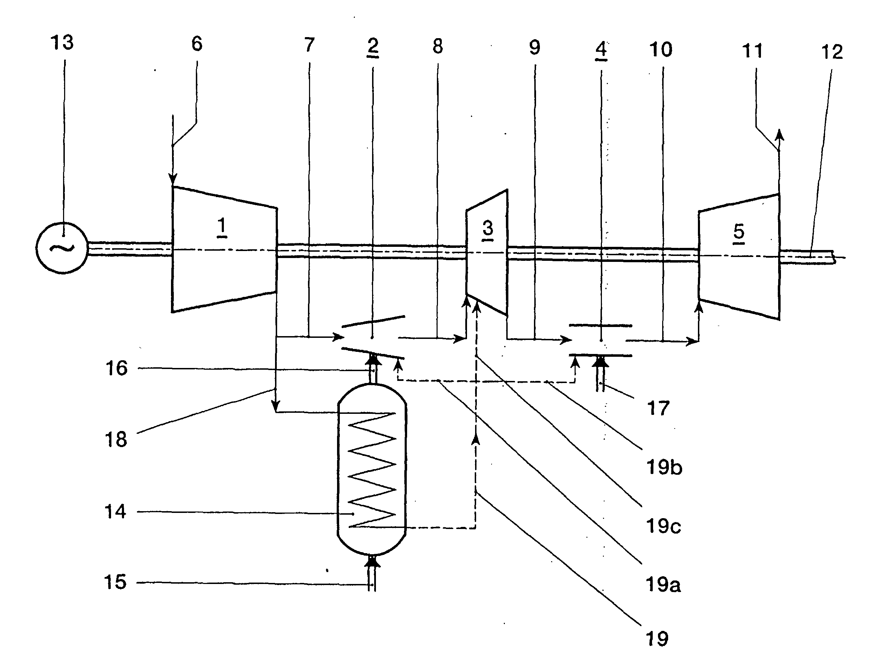

Im folgenden wird anhand der Zeichnung ein Ausführungsbeispiel der Erfindung näher erläutert. Alle für das unmittelbare Verständnis der Erfindung nicht erforderlichen Elemente sind weggelassen worden. Die Strömungsrichtung der Medien ist mit Pfeilen angegeben.

### Kurze Beschreibung der Zeichnung

Die einzige Figur zeigt eine Gasturbogruppe mit einem thermochemischen Prozess zu Bereitstellung eines energetisch hochwertigen Brennstoffes und einer hochqualitativen Kühlluft.

### Wege zur Ausführung der Erfindung, gewerbliche Verwendbarkeit

Die vorliegenden Gasturbogruppe ist auf einer sequentiellen Verbrennung aufgebaut. Diese Gasturbogruppe, als autonome Einheit betrachtet, besteht aus einem Verdichter 1, einer dem Verdichter nachgeschalteten ersten Brennkammer 2, einer dieser Brennkammer 2 nachgeschalteten ersten Turbine 3, einer dieser Turbine 3 nachgeschalteten zweiten Brennkammer 4 und einer dieser Brennkammer 4 nachgeschalteten zweiten Turbine 5. Die genannten Strömungsmaschinen 1, 3, 5 weisen eine einheitliche Rotorwelle 12 auf. Diese Rotorwelle 12 selbst ist vorzugsweise auf zwei in der Figur nicht ersichtlichen Lagern gelagert, welche kopfseitig des Verdichters 1 und stromab der zweiten Turbine 5 plaziert sind. Der Verdichter 1 kann je nach Auslegung, beispielsweise um die spezifische Leistung zu erhöhen, in zwei nicht gezeigte Teilverdichter unterteilt werden. Bei einer solchen Konstellation wird dann stromab des ersten Verdichters und stromauf des zweiten Verdichters ein Zwischenkühler geschaltet, in welchem die teilverdichtete Luft zwischengekühlt wird. Die in diesem ebenfalls nicht gezeigten Zwischenkühler anfallende Wärme wird optimal, also nutzbringend, eingesetzt, beispielsweise in den Prozess rückgeführt. Die angesaugte Luft 6 strömt als verdichtete Luft 7 in ein nicht näher gezeigtes Gehäuse, das in sich den Verdichteraustritt und die erste Turbine 3 einschliesst. Im diesem Gehäuse ist auch die erste Brennkammer 2 untergebracht, welche vorzugsweise als zusammenhängende Ringbrennkammer ausgebildet ist. Selbsverständlich kann die verdichtete Luft 7 zur ersten Brennkammer 2 aus einer nicht gezeigten Luftspeicheranlage beigestellt werden. Die Ringbrennkammer 2 weist kopfseitig, auf den Umfang verteilt, eine Anzahl von nicht näher gezeigten Brennern auf, welche vorzugsweise als Vormischbrenner ausgelegt sind. An sich können hier auch Diffusionsbrenner zum Einsatz gelangen. Im Sinne einer Reduzierung der Schadstoff-Emissionen aus dieser Verbrennung, insbesondere was die NOx-Emissionen betrifft, ist es indessen vorteilhaft, eine Anordnung von Vormischbrennern, wie sie in EP-A1-0 321 809 beschrieben sind, vorzusehen, wobei der Erfindungsgegenstand aus der genannten Druckschrift integrierender Bestandteil dieser Beschreibung ist; darüber hinaus ist Bestandteil dieser Beschreibung auch die dort beschriebene Art der Brennstoffzuführung. Was die Anordnung der Vormischbrenner in Umfangsrichtung der Ringbrennkammer 2 anbelangt, so kann eine solche bei Bedarf von der üblichen Konfiguration gleicher Brenner abweichen, stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration angeordnet ist. Die grossen Vormischbrenner, welche die Funktion von Hauptbrennern innehaben, stehen zu den kleinen Vormischbrennern, welche die Pilotbrenner dieser Brennkammer sind, bezüglich der sie durchströmenden Brennerluft, also der verdichteten Luft aus dem Verdichter 1, in einem Grössenverhältnis zueinander, das fallweise festgelegt wird. Im gesamten Lastbereich der Brennkammer arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 2 sehr nahe an die Wirbelzentren der Pilotbrenner heran, so dass eine Zündung an sich nur mit diesen Pilotbrennern möglich ist. Beim Hochfahren wird die Brennstoffmenge, die über die Pilotbrenner zugeführt wird, soweit gesteigert, bis diese ausgesteuert sind, d.h. bis die volle Brennstoffmenge zur Verfügung steht. Die Konfiguration wird so gewählt, dass dieser Punkt der jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll ausgesteuert.

Weil die durch die Pilotbrenner iniziierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer 2 aus einer Anzahl einzelner rohrförmiger Brennräume bestehen, welche ebenfalls schrägringförmig, bisweilen auch schraubenförmig, um die Rotorachse angeordnet sind. Diese Ringbrennkammer 2, unabhängig ihrer Auslegung, wird geometrisch so angeordnet, dass deren Länge keinen Einfluss auf die Gesamtrotorlänge der Gasturbogruppe entfaltet. Die Heissgase 8 aus dieser Ringbrennkammer 2 beaufschlagen die unmittelbar nachgeschaltete erste Turbine 3, deren kalorisch entspannende Wirkung auf die Heissgase bewusst minimal gehalten wird, d.h. diese Turbine 4 wird demnach aus nicht mehr als zwei Laufschaufelreihen bestehen. Bei einer solchen Turbine 3 wird nötig sein, einen Druckausgleich an den Stirnflächen zwecks Stabilisierung des Axialschubes vorzusehen. Die in der Turbine 3 teilentspannten Heissgase 9, welche unmittelbar in die zweite Brennkammer 4 strömen, weisen aus dargelegten Gründen eine recht hohe Temperatur auf, vorzugsweise ist sie betreibungsspezifisch so auszulegen, dass sie sicher noch um 1000°C beträgt. Diese zweite Brennkammer 4 hat im wesentlichen die Form eines zusammenhängenden ringförmigen axialen oder quasi-axialen Zylinders; sie kann selbstverständlich auch aus einer Anzahl von axial, quasiaxial oder schraubenförmig angeordneten und in sich abgeschlossenen Brennräumen bestehen. Was die Konfiguration der ringförmigen, aus einem einzigen Brennraum bestehenden Brennkammer 4 betrifft, so sind in Umfangsrichtung und radial dieses ringförmigen Zylinders mehrere Brennstofflanzen 17 disponiert. Die Brennkammer 4 weist an sich keinen Brenner auf: Die Verbrennung des in die aus der Turbine 3 kommenden teilentspannten Heissgase 9 eingedüsten Brennstoffes geschieht hier durch Selbstzündung, soweit freilich das vorgenannte Temperaturniveau eine solche Betreibungsart zulässt. Ausgehend davon, dass die Brennkammer 4 mit einem gasförmigen Brennstoff, also beispielsweise mit Erdgas betrieben wird, muss für eine Selbstzündung eine Temperatur der teilentspannten Heissgase 9 aus der Turbine 3 um die 1000°C vorliegen, und dies selbstverständlich auch bei Teillastbetrieb, was auf die Auslegung dieser Turbine 2 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 4, vorzugsweise an der Innen- und Aussenwand in Umfangsrichtung disponiert, eine Reihe von nicht näher gezeigten Elementen vorgesehen, welche in axialer Richtung vorzugsweise stromauf der Brennstofflanzen plaziert sind. Die Aufgabe dieser Elemente besteht darin, Wirbel zu erzeugen, welche eine Rückströmzone, analog derjenige in den bereits erwähnten Vormischbrennern gemäss EP-A1-0 321 809, induzieren. Da es sich bei dieser Brennkammer 4, aufgrund der axialen Anordnung und der Baulänge, um eine Hochgeschwindigkeitsbrennkammer handelt, bei welcher die mittlere Geschwindigkeit der Arbeitsgase grösser ca. 60 m/s ist, müssen die wirbelerzeugenden Elemente strömungskonform ausgebildet werden. Anströmungsseitig sollen diese vorzugsweise aus einer tetraederförmigen Form mit anströmungsschiefen Flächen bestehen. Die wirbelerzeugenden Elemente können entweder an der Aussenfläche und/oder an der Innenfläche plaziert sein. Selbstverständlich können die wirbelerzeugenden Elemente auch axial zueinander verschoben sein. Die abströmungsseitige Fläche dieser wirbelerzeugenden Elemente verläuft im wesentlichen radial, d.h. senkrecht gegenüber der Brennkammerwand, so dass sich ab dieser Stelle eine Rückströmzone einstellt. Die Selbstzündung in der Brennkammer 4 muss indessen auch in den transienten Lastbereichen sowie im Teillastbereich der Gasturbogruppe gesichert bleiben, d.h., es müssen Hilfsvorkehrungen vorgesehen werden, welche die Selbstzündung in der Brennkammer 4 auch dann sicherstellen, wenn sich aus irgendeinem Grund eine Verkleinerung der Temperatur der teilentspannten Heissgase 9 aus der Turbine 3 im Bereich der Eindüsung des Brennstoffes einstellen sollte. Um auch bei solchen Fällen eine sichere Selbstzündung des in die Brennkammer 4 eingedüsten gasförmigen Brennstoffes zu gewährleisten, wird diesem eine kleine Menge eines anderen Brennstoffes mit einer niedrigeren Zündtemperatur beigegeben. Die in der Brennkammer 4 aufbereiteten Heissgase 10 beaufschlagen anschliessend eine nachgeschaltete zweite Turbine 5. Die thermodynamischen Kennwerte der Gasturbogruppe können so ausgelegt werden, dass die Abgase 11 aus der zweiten Turbine 5 noch soviel kalorisches Potential aufweisen, um damit einen hier nicht dargestellten und nachgeschalteten Dampfkreislauf zu betreiben. Die zweite Brennkammer 4 wird vorzugsweise zwischen Abströmungsebene der ersten Turbine 3 und Anströmungsebene der zweiten Turbine 5 angeordnet. Da ferner die Entspannung der Heissgase in der ersten Turbine 3, aus dargelegten Gründen, über wenige Laufschaufelreihen erfolgt, lässt sich eine Gasturbogruppe bereitstellen, deren Rotorwelle 12 aufgrund ihrer minimierten Länge technisch einwandfrei auf zwei Lagern gelagert werden kann. Die Leistungsabgabe der Strömungsmaschinen geschieht über einen angekoppelten. Generator 15, der auch als Anwurfmotor dienen kann. Nach Entspannung in der Turbine 5 durchströmen die noch mit einem hohen kalorischen Potential versehenen Abgase 11 einen in der Figur nicht näher gezeigten Abhitzedampferzeuger, in welchem in Wärmetauschverfahren Dampf erzeugt wird, der dann vorzugsweise als Arbeitsmedium einer ebenfalls nicht näher gezeigten Dampfturbine zum Einsatz kommt. Ein Teil Verdichterluft 18 wird vor der Zuströmung in die erste Brennkammer 2 abgezweigt und durch einen auf Konversion arbeitenden katalytischen Generator 14 geleitet. Im Gegenstromprinzip wird dieser Generator 14 von einem aus Erdgas und Wasser resp. Dampf bestehenden Gemisch 15 durchströmt. Betreffend Konversion wird der Generator mit einer katalytischen Beschichtung ausgestattet, welche den angestrebten Prozess bei tiefen Temperaturen auszulösen vermag. Bei einem Temperaturniveau zwischen 800-850°C kann mit einem nickelbeschichteten Katalyt eine 100%ige Erdgas-Konversion erzielt werden. Bei einer tieferen Temperatur lässt sich dementsprechend nur eine Teilkonversion bewerkstelligen, die aber in den meisten Fälle immer noch ausreichend ist. Durch den im katalytischen Generator 14 stattfindenden endothermen Prozess wird die Verdichterluft-Teilmenge 18 auf ungefähr 400°C abgekühlt, wobei die hier entzogene Energie die Konversion des Gemisches 15 zu einem höheren Brennwert ermöglicht. Die aus dem katalytischen Generator 14 ausströmende Kühlluft 19 wird dann zur Kühlung mindestens eines thermisch hochbelasteten Aggregates der Gasturbogruppe eingesetzt. In der Figur wird beispielsweise die Kühlluft 19 in drei Stränge 19a, 19b, 19c aufgeteilt, welche die erste Brennkammer 2, die erste Turbine 3 und die zweite Brennkammer 4 kühlen. Hier geschieht die Kühlung der Aggregate parallel. Selbstverständlich kann diese Kühlung auch in Serie abgewickelt werden. Die hier beschriebene Bereitstellung der Kühlluft 19 lässt eine effiziente Kühlung der zu kühlenden Aggregate zu, womit eine kräftige Steigerung des Wirkungsgrades erzielt werden kann. Die Konversion des Brennstoffes kann in vorliegender Art auch für die zweite Brennkammer 4 vorgesehen werden, entweder anhand eines separaten oder für beide Brennkammern gemeinsamen katalytischen Generators bereitgestellt werden.

### Bezugszeichenliste

- 1: Verdichter
- 2: Erste Brennkammer
- 3: Erste Turbine
- 4: Zweite Brennkammer
- 5: Zweite Turbine
- 6: Ansaugluft
- 7: Verdichtete Luft
- 8: Heissgase
- 9: Teilenspannte Heissgase
- 10: Heissgase
- 11: Abgase
- 12: Rotorwelle
- 13: Elektrische Maschine
- 14: Katalytischer als Wärmetauscher arbeitender Generator
- 15: Erdgas/Wasser-Gemisch
- 16: Hochwertiger Brennstoff
- 17: Brennstoff für die zweite Brennkammer 4
- 18: Teil der Verdichterluft
- 19: Kühlluft
- 19a-c: Teilstränge der Verdichterluft

## Patentansprüche

1. Verfahren zum Betrieb einer Gasturbogruppe und zur Kühlung der thermisch hochbelasteten Aggregate, wobei die Gasturbogruppe im wesentlichen aus mindestens einem Verdichter, mindestens einer Brennkammer, mindestens einer Turbine und mindestens einer elektrischen Maschine besteht, wobei ein Teil Verdichterluft (18) als wärmeabgebendes Medium durch mindestens einen Wärmetauscher geleitet wird, und nach erfolgter Abkühlung zur Kühlung mindestens eines thermisch hochbelasteten Aggregates der Gasturbogruppe herangezogen wird, und wobei ein wärmeaufnehmendes Medium durch einen Teil des Wärmetauschers geleitet wird, welcher als Konverter ausgeführt ist, in dem das wärmeaufnehmende Medium wenigstens teilweise unter Wärmeaufnahme chemisch umgewandelt wird, **dadurch gekennzeichnet, dass** als wärmeaufnehmendes Medium ein Erdgas/Wasser- oder Erdgas/Dampfgemisch durch den Konverter geleitet wird, und dass das Verfahren mit einer teilweisen oder einer vollständigen Umwandlung des Gemisches durchgeführt wird.

2. Verfahren nach Anspruch 1, **dadurch gekennzeichnet, dass** die Umwandlung des Gemisches im Wärmetauscher (14) in Wirkverbindung mit einer dort vorhandenen katalytischen Beschichtung durchgeführt wird.

3. Verfahren nach Anspruch 1, **dadurch gekennzeichnet, dass** die Gasturbogruppe mit einer sequentiellen Verbrennung betrieben wird.

## Claims

1. Method of operating a gas-turbine group and of cooling the units subjected to high thermal loading, the gas-turbine group essentially comprising at least one compressor, at least one combustion chamber, at least one turbine and at least one electric machine, a portion of compressor air (18) being passed as a heat-dissipating medium through at least one heat exchanger and, once cooling has taken place, being used for cooling at least one unit of the gas-turbine group that is subjected to high thermal loading, and a heat-absorbing medium being passed through part of the heat exchanger which is configured as a converter, in which the heat-absorbing medium is chemically converted at least partially with heat absorption, **characterized in that** a natural-gas/water or natural-gas/steam mixture is passed as the heat-absorbing medium through the converter, and **in that** the method is carried out with a partial or complete conversion of the mixture.

2. Method according to Claim 1, **characterized in that** the conversion of the mixture in the heat exchanger (14) is carried out in interaction with a catalytic coating present there.

3. Method according to Claim 1, **characterized in that** the gas-turbine group is operated with sequential combustion.

## Revendications

1. Procédé en vue du fonctionnement d'un groupe de turbines à gaz et en vue du refroidissement d'unités à sollicitation thermique élevée, le groupe de turbines à gaz se composant pour l'essentiel d'au moins un compresseur, d'au moins une chambre de combustion, d'au moins une turbine et d'au moins une machine électrique, une partie d'air de compresseur (18) étant conduit en tant que fluide libérant de la chaleur à travers au moins un échangeur thermique et étant mis à contribution, après refroidissement réussi pour refroidir au moins une unité du groupe de turbines à gaz à sollicitation élevée, et un milieu absorbant la chaleur étant conduit à travers une partie de l'échangeur thermique, qui est réalisée sous la forme d'un convertisseur, dans lequel le milieu absorbant la chaleur est converti par voie chimique au moins partiellement avec absorption de chaleur, **caractérisé en ce que** l'on conduit à travers le convertisseur, en tant que milieu absorbant la chaleur un mélange gaz naturel/eau ou gaz naturel/vapeur et **en ce que** le procédé est effectué par une conversion partielle ou complète du mélange.

2. Procédé selon la revendication 1, **caractérisé en ce que** la conversion du mélange dans l'échangeur thermique (14) est effectuée en interaction avec le revêtement catalytique qui s'y trouve.

3. Procédé selon la revendication 1, **caractérisé en ce que** le groupe de turbines à gaz fonctionne à l'aide d'une combustion séquentielle.
